**Europäisches Patentamt**

**European Patent Office**

**Office européen des brevets**

(11) Veröffentlichungsnummer : **0 652 117 A1**

## (12) EUROPÄISCHE PATENTANMELDUNG

(21) Anmeldenummer : **94890164.0**

(22) Anmeldetag : **11.10.94**

(51) Int. Cl.$^6$ : **B60C 9/20**, B60C 3/04

(30) Priorität : **08.11.93 AT 2261/93**

(43) Veröffentlichungstag der Anmeldung :
**10.05.95 Patentblatt 95/19**

(84) Benannte Vertragsstaaten :
**AT DE ES FR GB IT LU**

(71) Anmelder : **Semperit Reifen
Aktiengesellschaft
Wienersdorferstrasse 20-24
A-2514 Traiskirchen (AT)**

(72) Erfinder : **Drosg, Wolfgang, Dipl.-Ing.
Herzgasse 64/10
A-1100 Wien (AT)**
Erfinder : **Zeiner, Paul, Dipl.-Ing.
Johann-Strauss-Gasse 13
A-3001 Mauerbach (AT)**

(74) Vertreter : **Vinazzer, Edith et al
Semperit Reifen Aktiengesellschaft
Patentabteilung
Wienersdorferstrasse 20-24
A-2514 Traiskirchen (AT)**

(54) **Reifen.**

(57)   Die Erfindung betriffl einen leichten PKW-Reifen mit einem Speed-Symbol gleich oder größer Q und einem Load-Index $\geq$ 50. Die Gürtelbreite beträgt zwischen 60 und 80 % der Breite des Reifens in der Bodenaufstandsfläche, die Seitenwanddicke ist $\leq$ 2 mm und das Verhältnis Load-Index zur Fadenteilung der Korde in den einzelnen Gürtellagen ist 1,2 bis 3,2.

Fig.1

Fig.2

EP 0 652 117 A1

Die vorliegende Erfindung betrifft einen Reifen in Radialbauart mit einem Speed-Symbol gleich oder größer Q und einem Load Index $\geqq$ 50, welcher Reifen einen Laufstreifen, ein Paar von Seitenwänden, ein Paar von Wulstbereichen mit Wulstkernen und Kernprofilen, eine insbesondere einlagige Karkasse, einen Gürtel mit mindestens zwei Gürtellagen, in welchen jeweils parallel verlaufende Stahlkorde angeordnet sind, wobei die Stahlkorde in diesen beiden Lagen einander kreuzen, aufweist.

Die Anforderungen, die an moderne PKW-Reifen gestellt werden, sind hoch. PKW-Reifen sollen einen möglichst geringen Rollwiderstand aufweisen, um den Treibstoffverbrauch von Kraftfahrzeugen herabzusetzen. Diese Reifen sollen ferner ein möglichst geringes Gewicht aufweisen, was sich auf das Gesamtgewicht des Fahrzeuges auswirkt und ebenfalls zu einer Verringerung des Treibstoffverbrauches beiträgt. Ein weiterer, immer wichtiger werdender Aspekt ist eine möglichst geringe Lärmbelästigung der Bevölkerung durch den Kraftfahrzeugverkehr, so daß auch das Vorbeifahrgeräusch von abrollenden Reifen herabgesenkt werden soll. Darüber hinaus muß gewährleistet sein, daß die sonstigen Reifeneigeschaften, wie beispielsweise Geradeauslaufstabilität, Ansprechen auf Lenkkräfte, Fahrkomfort, Naßgriff etc. zumindest gleichermaßen erhalten bleiben. Es bestehen jedoch ausgeprägte Vorurteile in der Fachwelt, und zwar dahingehend, daß konstruktive Maßnahmen am Reifenaufbau, die grundsätzlich eine Gewichtsreduktion bewirken würden nicht oder nur beschränkt setzbar sind, da die erforderliche Haltbarkeit und Sicherheit solcher Reifen nicht mehr gewährleistet wäre.

In jüngster Vergangenheit sind Reifen für Elektrofahrzeuge entwickelt worden und am Markt präsentiert worden, bei denen ansatzweise erste Maßnahmen zur Senkung des Rollwiderstandes unter gleichzeitiger Senkung des Gewichtes getroffen wurden, wie beispielsweise relativ dünne Seitenwände und dünne Innenplatten. Diese Reifen werden naturgemäß in kleinen Dimensionen mit geringem Speed Index und geringem Load Index angeboten.

Die Erfindung hat sich nun die Aufgabe gestellt, einen Reifen der eingangs genannten Art zu entwickeln, der entgegen der bestehenden Vorurteile ein gegenüber herkömmlichen Reifen gleicher Dimensionierung deutlich verringertes Gewicht und einen geringeren Rollwiderstand aufweist, im Vorbeifahrgeräusch verbessert ist und zumindest gleichwertig in seinen sonstigen Eigenschaften ist.

Gelöst wird die gestellte Aufgabe erfindungsgemäß dadurch, daß die Breite des Gürtels zwischen 60 und 80 % der Breite des Reifens in der Bodenaufstandsfläche beträgt, daß die Dicke der Seitenwände s 2,0 mm beträgt, und daß das Verhältnis Load Index zu Fadenteilung der Korde in den einzelnen Gürtellagen zwischen 1,2 und 3,2 ist.

In Summe können die genannten Maßnahmen zu einer Gewichtsreduktion in der Größenordnung von mindestens 15 % beitragen. Bei entsprechender Abstimmung der einzelnen Maßnahmen aufeinander ist auch eine Gewichtsreduktion um 20 % oder mehr möglich. Hat beispielsweise ein herkömmlicher Reifen der Dimension 175/70 R 13 ein durchschnittliches Gewicht von ca. 6,8 kg, so ist ein erfindungsgemäß ausgeführter Reifen der gleichen Dimension ist mit einem Gewicht $\leqq$ 5,6 kg realisierbar. Es wurde überraschenderweise und entgegen der bisherigen Meinung der einschlägigen Fachwelt festgestellt, daß ein bezüglich Haltbarkeit und Sicherheit vollauf befriedigender Reifen dann machbar ist, wenn das angegebene Verhältnis Load Index zu Fadendichte innerhalb des angegebenen Bereiches liegt.

Weitere besonders vorteilhafte Merkmale und Ausgestaltungen der Erfindung sind in den Unteransprüchen enthalten.

Die Lebensdauer und Haltbarkeit des Gürtels sind dann besonders gut abstimmbar, wenn das Verhältnis Load Index zu Fadenteilung zwischen 1,25 und 2,2 gewählt wird.

Es ist ferner günstig, wenn die Breite des Gürtels zwischen 60 und 70 % der Breite des Reifens in der Bodenaufstandsfläche beträgt. In diesem Bereich macht sich eine spürbare Gewichtsreduktion bemerkbar, ohne daß dabei die Schnellauffestigkeit des Reifens beeinträchtigt wird, was jedoch bei Gürtelbreiten unter 60 % zu erwarten ist.

Es hat sich ferner ergeben, daß auch die Seitenwanddicke gegenüber herkömmlichen Reifen erheblich herabgesenkt werden kann. Die Seitenwanddicke kann insbesondere in einem Bereich zwischen 1,0 und 1,8 mm gewählt werden, was ebenfalls eine deutliche Gewichtsersparnis bringt und keine Auswirkungen auf die Reifenhaltbarkeit zeigt.

In den Gürtellagen können Stahlkorde verwendet werden, deren Zugfestigkeit zwischen 2.500 und 3.500 N/mm$^2$, insbesondere zwischen 2.700 und 3.300 N/mm$^2$, liegt. Korde mit diesen Zugfestigkeitswerten tragen zur erforderlichen Gürtelhaltbarkeit bei, wobei die Tragfähigkeit des Gürtels dann sichergestellt ist, wenn das Verhältnis Load-Index zu Fadenteilung $\geqq$ 1,2 ist.

Es ist demnach eine relativ geringe Fadendichte in den einzelnen Gürtellagen, die insbesondere zwischen 30 und 70 Korden pro 10 cm, vorzugsweise $\leqq$ 65 Korde pro 10 cm betragen kann, wählbar.

Eine weitere Maßnahme, die ebenfalls zu einer Verringerung des Reifengewichtes beiträgt besteht darin, daß der Reifen mit einer Innenplatte versehen ist, die auf einer Kautschukmischung, die einen halogenierten Butylkautschuk enthält, basiert und eine Dicke $\leqq$ 0,7 mm, insbesondere von 0,3 bis 0,4 mm, aufweist.

Auf das innere Gleichgewicht des gesamten Reifenkörpers wirkt es sich ferner günstig aus, wenn das Kernprofil in jedem Wulstbereich eine Shore Härte A zwischen 50 und 75 und eine Rückprallelastizität bei Raumtemperatur $\geqq$ 40 % aufweist. Dabei kann insbesondere die Shore Härte A $\leqq$ 70 und die Rückprallelastizität bei Raumtemperatur $\geqq$ 45 % sein. Diese Maßnahme macht die Wulstbereiche weicher und elastischer als es bei herkömmlichen Reifen üblich ist.

Eine weitere Maßnahme, die dazu beiträgt, die Wulstbereiche weicher zu gestalten besteht darin, daß der Karkasshochschlag bis auf eine Höhe reicht, die zwischen 5 und 15 % der Reifenhöhe beträgt.

Einen weiteren Beitrag dazu und zur Gewichtsreduktion kann ferner das Kernprofil selbst leisten, wenn dieses relativ kurz bemessen wird und bis auf eine Höhe reicht, die zwischen 15 und 28 % der Reifenhöhe beträgt.

Von besonderem Vorteil ist es dabei, wenn der Karkasshochschlag in einer Höhe $\leqq$ 12 % der Reifenhöhe endet und das Kernprofil bis auf eine maximale Höhe reicht, die $\leqq$ 25 % der Reifenhöhe beträgt.

Bei einer anderen Ausführungsvariante der Erfindung ist das freie Karkasslagenende nahezu zur Gänze um den Wulstkern herumgeführt, ein kurzer Karkasshochschlag verläuft parallel zur Karkasslage und in unmittelbarer Nähe derselben. Diese Ausführung wirkt sich ebenfalls günstig auf das Reifengewicht aus und hat ferner den Vorteil, daß das Karkassende weniger Belastungen ausgesetzt ist.

Weitere Merkmale, Vorteile und Einzelheiten der Erfindung werden nun anhand der Zeichnung, die zwei Ausführungsbeispiele darstellt, näher beschrieben. Dabei zeigt Fig. 1 schematisch einen Querschnitt durch die eine Hälfte eines nach der gegenständlichen Erfindung gestalteten Reifens, dessen zweite Hälfte gleich ausgeführt ist, Fig. 2 ein vergrößertes Detail aus dem Laufstreifen- bzw. Gürtelbereich dieses Reifens und Fig. 3 eine Variante der Wulstgestaltung.

Sämtliche erwähnten Abmessungen und Dimensionsangaben einzelner Reifenbauteile beziehen sich auf die Geometrie des Fertigreifens.

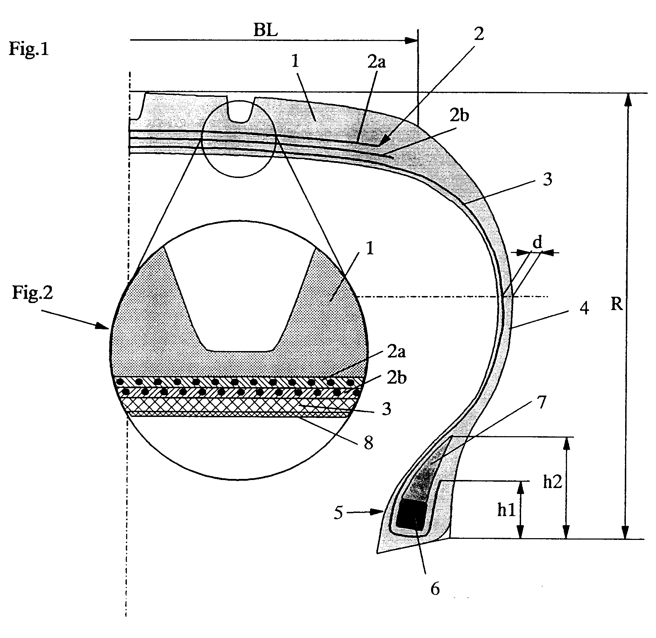

Der in Fig. 1 dargestellte Reifen ist ein PKW-Reifen mit einem Speed-Symbol (Geschwindigkeitssymbol) $\geqq$ Q. Diese Speed-Symbols und ihre Definition können dem E.T.R.T.O.-Standards-Manual entnommen werden. Der Reifen umfaßt einen Laufstreifen 1, einen Gürtel 2, eine einlagige Karkasse 3, zwei Seitenwände 4, Wulstbereiche 5 mit Wulstkernen 6 und einem Kernprofil 7 und eine Innenplatte 8.

Eine Anzahl von Maßnahmen, die im folgenden näher beschrieben werden, tragen dazu bei, das Reifengewicht erheblich zu reduzieren.

Der Gürtel 2 besteht aus 2 Gürtellagen 2a, 2b, die Breite des Gürtels 2, gemessen an der seitlichen Erstreckung der breiteren Gürtellage 2b beträgt zwischen 60 und 80 %, insbesondere zwischen 60 und 70 %, der Breite BL des Reifens in der Bodenaufstandsfläche. Die Breite BL entspricht der größten Latschabdruckbreite, ermittelt mit einem Reifen, welcher auf seiner Normfelge aufgebracht ist, und sich unter Maximallast und zugehörigem Innendruck entsprechend E.T.R.T.O. Standards Manual befindet.

Die Gürtellagen 2a, 2b weisen Stahlkorde 12 auf, die in jeder Lage parallel zueinander verlaufen und relativ zur Umfangsrichtung des Reifens unter einem vergleichsweise kleinen Winkel von ca. 18 bis 28° verlaufen, wobei die Korde der beiden Lagen einander kreuzen. Die Stahlkorde 12 sind in eine Kautschukmischung eingebettet, deren Dicke zwischen 0,8 und 0,9 mm beträgt. Die Stahlkorde 12 besitzen eine Zugfestigkeit im Bereich zwischen 2.500 N/mm$^2$ bis 3.500 N/mm$^2$, insbesondere zwischen 2.700 N/mm$^2$ und 3.300 N/mm$^2$. Die Stahlkorde 12 bestehen aus zumindest einem Einzelfilament. Mehrere Einzelfilamente können Stahlkorde bestimmter Konstruktion ergeben, beispielsweise eine 1x2, 1x3 oder eine 2x2-Konstruktion. Aus Gewichts- und Festigkeitsgründen wird bevorzugt eine 1x2-Konstruktion eingesetzt, deren Filamente aus einem high tensile Stahl mit einem Kohlenstoffgehalt zwischen 0,8 bis 1 % bestehen. Es werden bevorzugt Filamente verwendet, deren Durchmesser zwischen 0,25 bis 0,35 mm, insbesondere 0,30 mm beträgt.

Es hat sich nun überraschenderweise herausgestellt, daß ein relativ breiter Kordabstand in den einzelnen Gürtellagen 2a, 2b gewählt werden kann, was aus Gewichtsgründen von Vorteil ist. So hat sich insbesondere herausgestellt, daß eine Fadendichte von 30 bis 70 Korden pro 10 cm, insbesondere von 50 bis 65 Korden pro 10 cm, keinerlei negative Auswirkungen auf die Gürtelhaltbarkeit zeigt.

Als Maß für die Tragfähigkeit eines Reifens mit geringer Fadendichte hat sich im Rahmen der Erfindung das Verhältnis von load index zu Fadendichte herausgestellt, welches für Reifen mit einem Load Index $\geqq$ 50 (Tragfähigkeitskennzahl, entnehmbar E.T.R.T.O.-Standards-Manual) zwischen 1,2 und 3,2 betragen soll. Dabei sollte dieses Verhältnis insbesondere zwischen 1,25 und 2,2 gewählt werden.

Eine weitere Gewichtsreduktion ist durch die Ausgestaltung der Seitenwände 4 realisierbar. Die Seitenwände 4 werden dünner ausgeführt als bei herkömmlichen Reifen, und haben eine Dicke d, gemessen an der Stelle des Reifens mit der größten Breite zwischen 1,0 bis 2,0 mm, insbesondere beträgt d zwischen 1,0 mm und 1,8 mm. Der Reifen ist ferner mit einer dünnen Innenplatte 8 versehen, die aus einer luftundurchlässigen Mischung, die beispielsweise aus einem halogenierten Butylkautschuk basiert, besteht. Die Innenplatte 8 weist eine Dicke, gemessen im Scheitel des Reifens, von ≦ 0,7 mm, insbesondere zwischen 0,3 und 0,4 mm, auf.

Die einlagige Karkasse 3 besteht bevorzugt aus einem Polyestergewebe, beispielsweise der Konstruktion 1440/2-100EPDm und umschlingt in den beiden Wulstbereichen 5 die Wulstkerne 6. Oberhalb der Wulstkerne 6, die herkömmliche Stahldrahtwulstkerne sein können, ist je ein im Querschnitt im wesentlichen dreieckförmiges Kernprofil 7 angeordnet. Um einerseits auch im Wulstbereich gewichtsreduzierende Maßnahmen zu setzen und um andererseits jedoch das Reifengleichgewicht im Gesamtkonzept eines möglichst leichten Reifens zu gewährleisten sind im Rahmen der vorliegenden Erfindung auch im Wulstbereich einige Maßnahmen gesetzt worden. So ist etwa der Karkasshochschlag 3a wesentlich kürzer ausgeführt als bei herkömmlich gebauten Reifen. Der Hochschlag 3a endet in einer Höhe h1, gemessen vom Eckpunktsdurchmesser der Felge gemäß E.T.R.T.O. Standards Manual, die zwischen 5 und 15 % der Reifenhöhe R beträgt. Das Kernprofil 7 reicht bis auf eine Höhe h2, vom selben Bezugspunkt wie h1 gemessen, die zwischen 15 und 28 % der Reifenhöhe R beträgt. Vorzugsweise ist $h1 ≦ 12 \% R$ und $h2 ≦ 25 \% R$. In jedem Fall ist $h2 ≧ h1$. Jedes Kernprofil selbst besteht ferner aus einer relativ weichen und elastischen Gummimischung. Die Shore-Härte A (gemäß DIN 53505) des Kernprofiles 7 beträgt zwischen 50 bis 75 und ist günstigerweise ≦ 70, die Rückprallelastizität bei Raumtemperatur (gemäß DIN 53512) ist ≧ 40 %, insbesondere ≧ 45 %. Der kurze Hochschlag der Karkasse sowie das kurze Kernprofil und dessen weiche und elastische Gummimischung ergeben insgesamt einen weichen Wulstbereich 5, wodurch die wesentlichen Bauteile dieses Reifens, nämlich Laufstreifen mit Gürtel, Seitenwand und Wulstbereich derart aufeinander abgestimmt sind, daß unerwünschte Biegespannungen im gesamten Reifenkörper weitgehend vermieden werden. Die in den Wulstbereichen 5 gesetzten Maßnahmen wirken sich außerdem sehr günstig auf den Fahrkomfort aus, da dadurch gewährleistet ist, daß trotz eines insgesamt geringen Materialeinsatzes Einzelstöße, insbesondere durch Querfugen und dergleichen im Untergrund, gut absorbiert werden können.

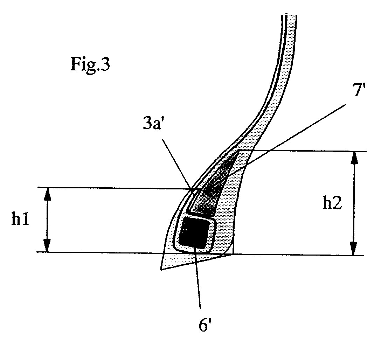

Eine Variante der Ausgestaltung des Wulstbereiches ist in Fig. 3 dargestellt. Dabei ist das freie Karkasslagenende 3'a nahezu komplett um den Wulstkern 6' herumgeführt, um über ein kurzes Stück wieder parallel zur Karkasslage und in unmittelbarer Nähe derselben zu verlaufen. Oberhalb des Wulstkernes, jedoch getrennt durch das um den Wulstkern 6' geschlagene freie Ende 3'a der Karkasse 3' ist ein Kernprofil 7' angeordnet. Die Werte für h1 und h2 entsprechen jenen gemäß dem Ausführungsbeispiel nach Fig. 1. Das Kernprofil 7' ist ferner günstigerweise ebenfalls aus einer Mischung gefertigt, deren Härte und Rückprallelastizität den bereits oben angegebenen Werten entsprechen.

Reifen der Dimension 175/70 R 13 wurden nach dem Konzept der gegenständlichen Erfindung gebaut und unterschiedlichen Tests unterworfen. Bei den Testreifen betrug die Gürtelbreite 67 % der Laufstreifenbreite BL, in den beiden Gürtellagen wurde als Festigkeitsträger ein Stahlkord der Konstruktion 2x0,30 mm in high tensile-Ausführung verwendet, die Fadendichte betrug 65 Korde/10 cm, die Seitenwanddicke d betrug 1,7 mm, die Höhe h1 des Karkasshochschlages 12 % von R und die Höhe h2 des Kernprofiles 24 % von R. Das Kernprofil wurde aus einer üblichen Kautschukmischung gefertigt, die Shore Härte A betrug 70, die Rückprallelastizität bei Raumtemperatur 42 %. Die Testreifen wurden einigen Prüfungen unterzogen und mit Reifen der gleichen Dimension, jedoch herkömmlichen Aufbau verglichen.

Getestet wurden jeweils der Rollwiderstand, die Dauerhaltbarkeit, die Schnellaufhaltbarkeit und das Vorbeifahrgeräusch unter folgenden Bedingungen:

Rollwiderstand:                Messung des Antriebsmomentes auf einer 2m-Prüftrommel, Wert bei 60 km/h
Dauerhaltbarkeit:              nach FMVSS 109 (Federal Motor Vehicle Safety Standard, USA)
Schnellaufhaltbarkeit:        nach FMVSS 109
Vorbeifahrgeräusch:          in Anlehnung an ISO R 362 (ohne Antrieb, Motor abgestellt)

Tabelle 1 zeigt die ermittelten Testergebnisse zweier Testreifen im Vergleich zu den Ergebnissen eines herkömmlichen Vergleichsreifens. Angegeben sind Kennzahlen, wobei die mit dem Vergleichsreifen ermittelten Werte gleich 100 gesetzt sind und Werte >100 eine Verbesserung bedeuten.

Tabelle 1

## Reifen-Testergebnisse

| | Gewicht [kg] | Rollwiderstand | Schnellauf-festigkeit | Dauerhalt-barkeit | Vorbeifahr-geräusch |
|---|---|---|---|---|---|
| Vergleichsreifen | 6,8 | 100 | 100 | 100 | 100 |
| Testreifen 1 | 5,4 | 121 | 95 | 95 | 107 |
| Testreifen 2 | 5,4 | 120 | 96 | 98 | 107 |

EP 0 652 117 A1

**Patentansprüche**

1. PKW-Reifen in Radialbauart mit einem Speed-Symbol gleich oder größer Q und einem Load Index $\geq$ 50, welcher Reifen einen Laufstreifen, ein Paar von Seitenwänden, ein Paar von Wulstbereichen mit Wulstkernen und Kernprofilen, eine insbesondere einlagige Karkasse, einen Gürtel mit mindestens zwei Gürtellagen, in welchen jeweils parallel verlaufende Stahlkorde angeordnet sind, wobei die Stahlkorden in den einander benachbarten Lagen einander kreuzen, aufweist, dadurch gekennzeichnet, daß die Breite des Gürtels (2) zwischen 60 und 80 % der Breite (BL) des Reifens in der Bodenaufstandsfläche beträgt, daß die Dicke (d) der Seitenwände (4) $\leq$ 2 mm beträgt, und daß das Verhältnis Load-Index zur Fadenteilung der Korde in den einzelnen Gürtellagen (2a, 2b) zwischen 1,2 und 3,2 ist.

2. Reifen nach Anspruch 1, dadurch gekennzeichnet, daß das Verhältnis Load-Index zu Fadenteilung zwischen 1,25 und 2,2 ist.

3. Reifen nach Anspruch 1 oder 2, dadurch gekennzeichnet, daß die Breite des Gürtels (2) zwischen 60 und 70 % der Breite (BL) des Reifens in der Bodenaufstandsfläche ist.

4. Reifen nach einem der Ansprüche 1 bis 3, dadurch gekennzeichnet, daß die Dicke (d) der Seitenwände (4) zwischen 1 und 1,8 mm beträgt.

5. Reifen nach einem der Ansprüche 1 bis 4, dadurch gekennzeichnet, daß die Stahlkorde in den Gürtellagen (2a, 2b) eine Zugfestigkeit von 2.500 N/mm² bis 3.500 N/mm², insbesondere zwischen 2.700 N/mm² und 3.300 N/mm², aufweisen.

6. Reifen nach einem der Ansprüche 1 bis 5, dadurch gekennzeichnet, daß die Fadendichte der Stahlkorde in den Gürtellagen (2a, 2b) 30 bis 70 Korde pro 10 cm, insbesondere $\leq$ 65 Korde pro 10 cm, beträgt.

7. Reifen nach einem der Ansprüche 1 bis 6, dadurch gekennzeichnet, daß er mit einer Innenplatte (8) versehen ist, die auf einer Kautschukmischung, die einen halogenierten Butylkautschuk enthält, basiert und eine Dicke $\leq$ 0,7 mm, insbesondere von 0,3 bis 0,4 mm, aufweist.

8. Reifen nach einem der Ansprüche 1 bis 7, dadurch gekennzeichnet, daß das Kernprofil (7, 7') in jedem Wulstbereich (5) eine Shore Härte A zwischen 50 und 75, insbesondere $\leq$ 70, und eine Rückprallelastizität bei Raumtemperatur $\geq$ 40 %, insbesondere $\geq$ 45 % aufweist.

9. Reifen nach einem der Ansprüche 1 bis 8, dadurch gekennzeichnet, daß der Karkasshochlag (3a, 3'a) bis auf eine Höhe (h1) reicht, die zwischen 5 und 15 % der Reifenhöhe (R) beträgt.

10. Reifen nach einem der Ansprüche 1 bis 9, dadurch gekennzeichnet, daß das Kernprofil (7, 7') bis auf eine Höhe (h2) reicht, die zwischen 15 und 28 % der Reifenhöhe (R) beträgt.

11. Reifen nach Anspruch 9, dadurch gekennzeichnet, daß der Karkasshochschlag (3a, 3'a) in einer Höhe (h1) $\leq$ 12 % der Reifenhöhe (R) endet.

12. Reifen nach Anspruch 10, dadurch gekennzeichnet, daß das Kernprofil (7, 7') bis auf eine Höhe (h2) $\leq$ 25 % der Reifenhöhe (R) reicht.

13. Reifen nach einem der Ansprüche 1 bis 12, dadurch gekennzeichnet, daß das freie Karkasslagenende (3'a) nahezu zur Gänze um den Wulstkern (6') herumgeführt ist und der Hochschlag neben der Karkasslage verläuft.

Fig.1

Fig.2

BL

2

2a

2b

1

3

d

4

R

7

5

6

h1

h2

8

Fig.3

EP 0 652 117 A1

**Europäisches Patentamt**

**EUROPÄISCHER RECHERCHENBERICHT**

Nummer der Anmeldung

EP 94 89 0164

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | EP-A-0 554 108 (BRIDGESTONE CORP.) <br> * Seite 2, Spalte 30 - Seite 3, Spalte 15; Ansprüche; Abbildungen; Beispiele * <br> * Seite 4, Zeile 31 - Zeile 39 * <br> --- | 1,3,4,7 | B60C9/20 <br> B60C3/04 |
| A | EP-A-0 317 636 (BRIDGESTONE CORP.) <br> * Seite 4; Ansprüche; Abbildungen; Tabellen * <br> --- | 1 | |
| A | GB-A-2 024 119 (UNIROYAL GMBH) <br> * Ansprüche; Abbildungen * <br> --- | 8 | |
| A | EP-A-0 128 852 (THE GOODYEAR TIRE & RUBBER CO.) <br> * Seite 5, Zeile 9 - Zeile 15; Ansprüche; Abbildungen * <br> * Seite 1, Zeile 23 - Zeile 26 * <br> --- | 1 | |
| A | EP-A-0 248 164 (THE FIRESTONE TIRE&RUBBER CO) <br> * Seite 9, Zeile 8 - Zeile 12; Ansprüche; Abbildungen; Tabelle 3 * <br> --- | 1 | **RECHERCHIERTE SACHGEBIETE (Int.Cl.6)** |
| A | US-A-5 027 877 (TAMURA ET AL.) <br> * Anspruch 4 * <br> ----- | 1 | B60C |

Der vorliegende Recherchenbericht wurde für alle Patentansprüche erstellt

| Recherchenort | Abschlußdatum der Recherche | Prüfer |
|---|---|---|
| DEN HAAG | 21. Februar 1995 | Baradat, J-L |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
.......................................................................
& : Mitglied der gleichen Patentfamilie, übereinstimmendes
    Dokument

EPO FORM 1503 03.82 (P04C03)

9